# EUROPEAN PATENT APPLICATION

(11) **EP 4 738 261 A1**
(43) Date of publication of application: **06.05.2026**
(21) Application number: 24831483.3
(22) Date of filing: 21.05.2024
(51) Int. Cl.: G06T 9/00

(54) **DECODING METHOD, ENCODING METHOD, DECODING DEVICE, AND ENCODING DEVICE**

(30) Priority: 27.06.2023 US 202363523450 P
(71) Applicant: Panasonic Intellectual Property Corporation of America, Torrance, CA 90504 (US)
(72) Inventor: ITO, Atsushi, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); IGUCHI, Noritaka, Kadoma-shi, Osaka 571-0057 (JP)
(74) Representative: Grünecker Patent- und Rechtsanwälte PartG mbB
(86) International application number: PCT/JP2024/018618
(87) International publication number: WO 2025/004611

(57) **Abstract**

A decoding method includes: deriving sorted edge vertices of a node according to a TriSoup scheme (S301); deriving a face vertex provided on a surface of the node except for edges of the node (S302); selecting two adjacent edge vertices that are adjacent to each other in sort order and closest to the face vertex among the sorted edge vertices (S303); and generating a TriSoup triangle by using the face vertex and one of the two adjacent edge vertices (S304).

## Description

### [Technical Field]

The present disclosure relates to a decoding method, an encoding method, a decoding device, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

In such encoding and decoding of three-dimensional data, there is a demand for improving the accuracy of three-dimensional data that is restored.

The present disclosure has an object to provide a decoding method, an encoding method, a decoding device, or an encoding device capable of improving the accuracy of three-dimensional data that is restored.

### [Solution to Problem]

A decoding method according to an aspect of the present disclosure includes: deriving sorted edge vertices of a node according to a TriSoup scheme; deriving a face vertex provided on a surface of the node except for edges of the node; selecting two adjacent edge vertices that are adjacent to each other in sort order and closest to the face vertex among the sorted edge vertices; and generating a TriSoup triangle by using the face vertex and one of the two adjacent edge vertices.

An encoding method according to an aspect of the present disclosure includes: deriving sorted edge vertices of a node according to a TriSoup scheme; deriving a face vertex provided on a surface of the node except for edges of the node; selecting two adjacent edge vertices that are adjacent to each other in sort order and closest to the face vertex among the sorted edge vertices; and generating a TriSoup triangle by using the face vertex and one of the two adjacent edge vertices.

### [Advantageous Effects of Invention]

The present disclosure can provide a decoding method, an encoding method, a decoding device, or an encoding device capable of improving the accuracy of three-dimensional data that is restored.

### [Brief Description of Drawings]

[FIG. 1]

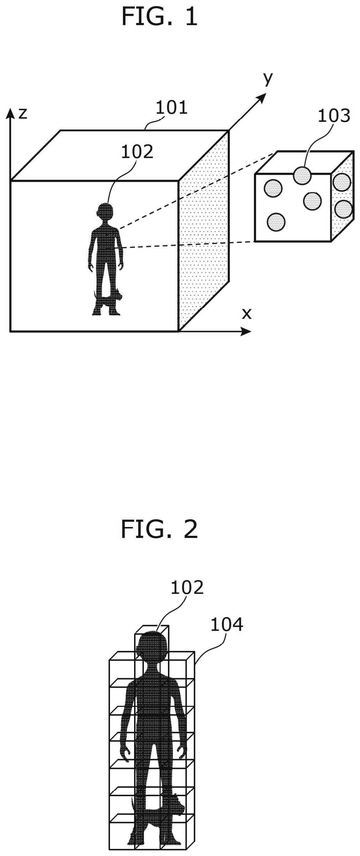

   FIG. 1 is a diagram illustrating an example of an original point cloud according to an embodiment.
[FIG. 2]
   FIG. 2 is a diagram illustrating an example of a trimmed octree according to the embodiment.
[FIG. 3]

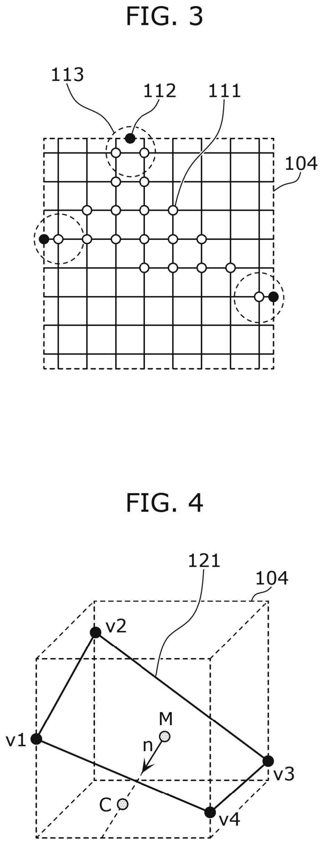

   FIG. 3 is a diagram illustrating an example in which a leaf-node according to the embodiment is two-dimensionally displayed.
[FIG. 4]
   FIG. 4 is a diagram for describing a method for generating a centroid vertex according to the embodiment.
[FIG. 5]

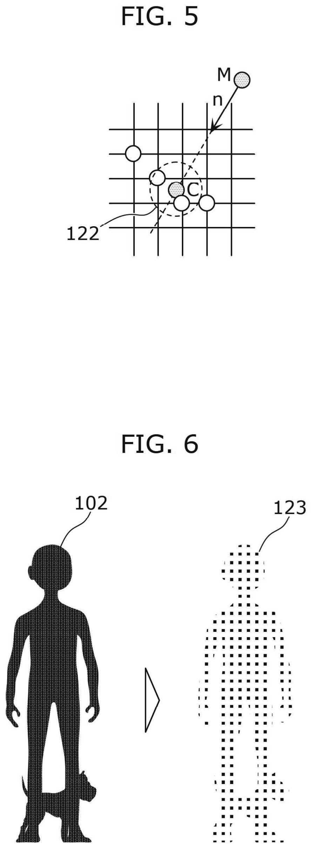

   FIG. 5 is a diagram for describing the method for generating a centroid vertex according to the embodiment.
[FIG. 6]
   FIG. 6 is a diagram illustrating an example of vertex information according to the embodiment.
[FIG. 7]

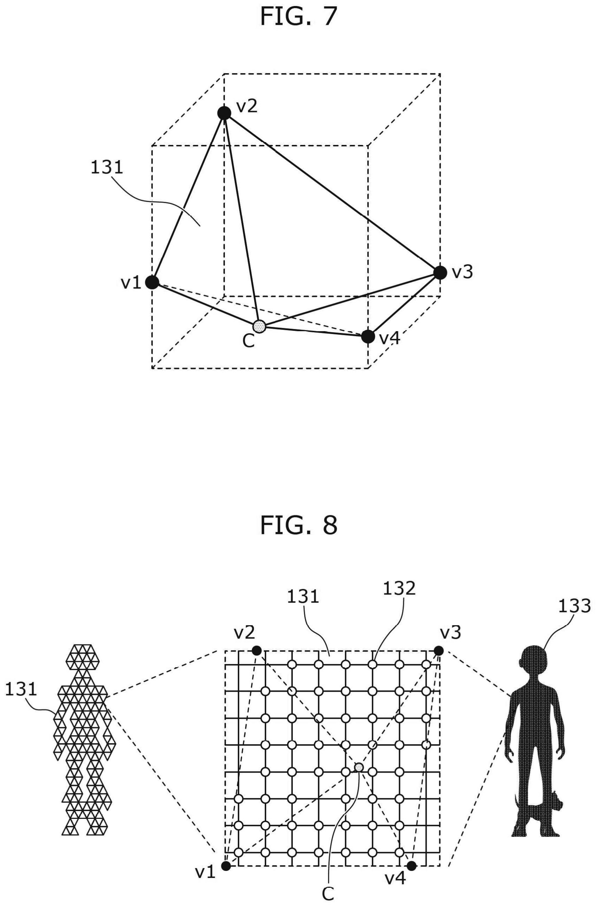

   FIG. 7 is a diagram illustrating an example of a TriSoup surface according to the embodiment.
[FIG. 8]
   FIG. 8 is a diagram for describing point cloud reconstruction processing according to the embodiment.
[FIG. 9]

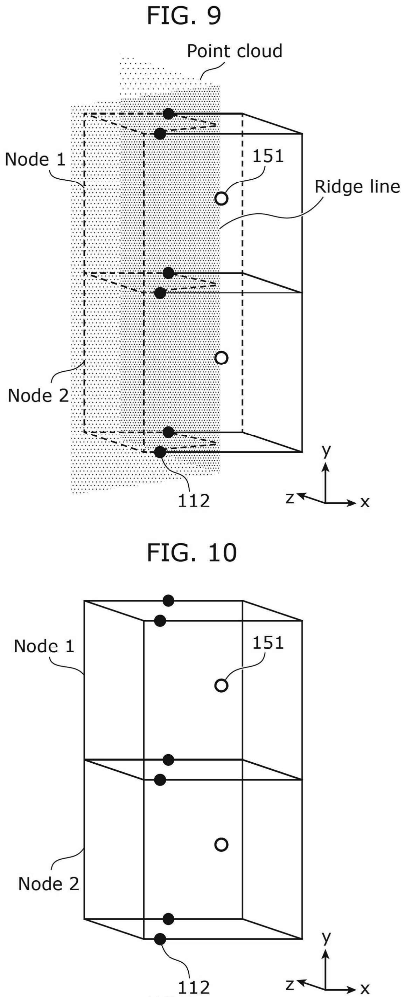

   FIG. 9 is a diagram illustrating an example of a point cloud according to the embodiment.
[FIG. 10]
   FIG. 10 is a diagram illustrating an example of centroid vertex generation according to the embodiment.
[FIG. 11]

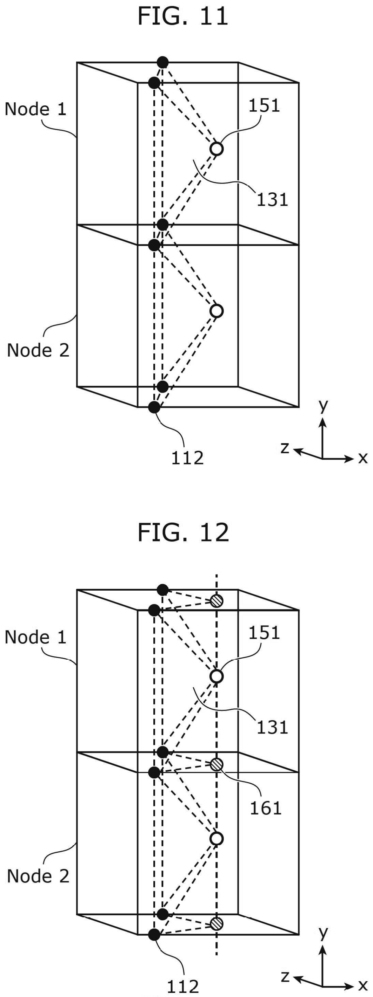

   FIG. 11 is a diagram illustrating an example of triangle (TriSoup surface) generation according to the embodiment.
[FIG. 12]
   FIG. 12 is a diagram illustrating an example of face vertex generation according to the embodiment.
[FIG. 13]

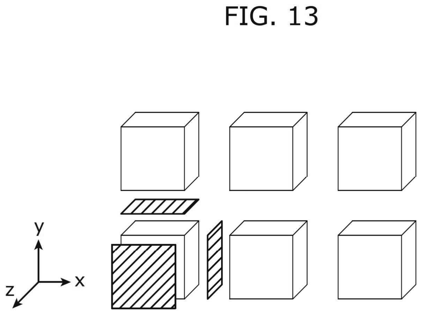

   FIG. 13 is a diagram illustrating an example of surfaces about which the connectivity evaluation and reconstruction of the centroid vertex are performed according to the embodiment.
[FIG. 14]

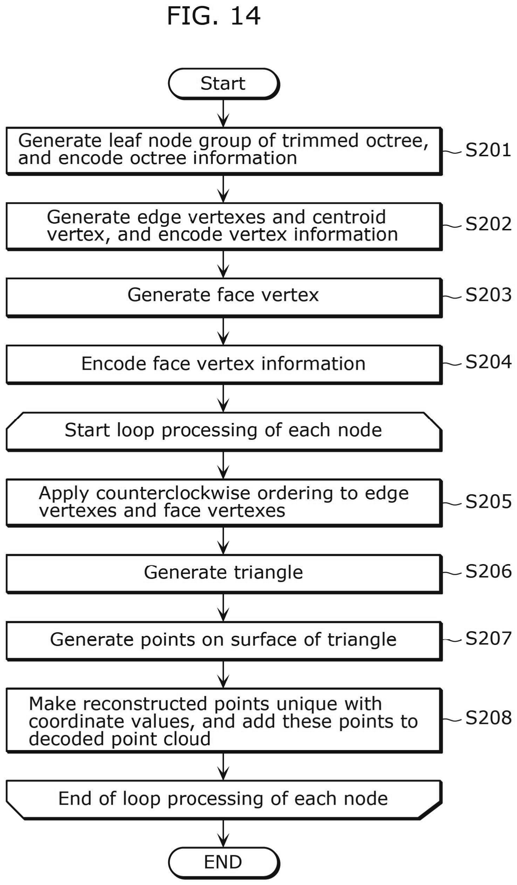

   FIG. 14 is a flowchart of encoding processing according to the embodiment.
[FIG. 15]

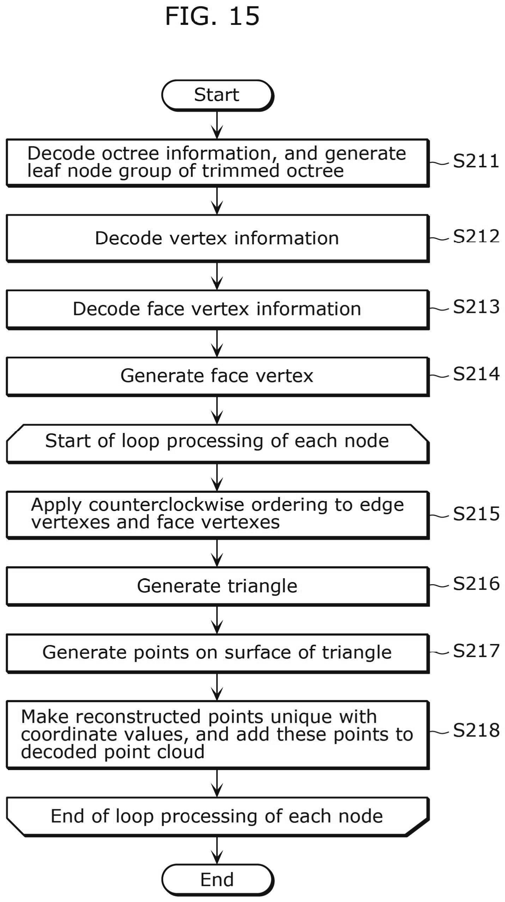

   FIG. 15 is a flowchart of decoding processing according to the embodiment.
[FIG. 16]

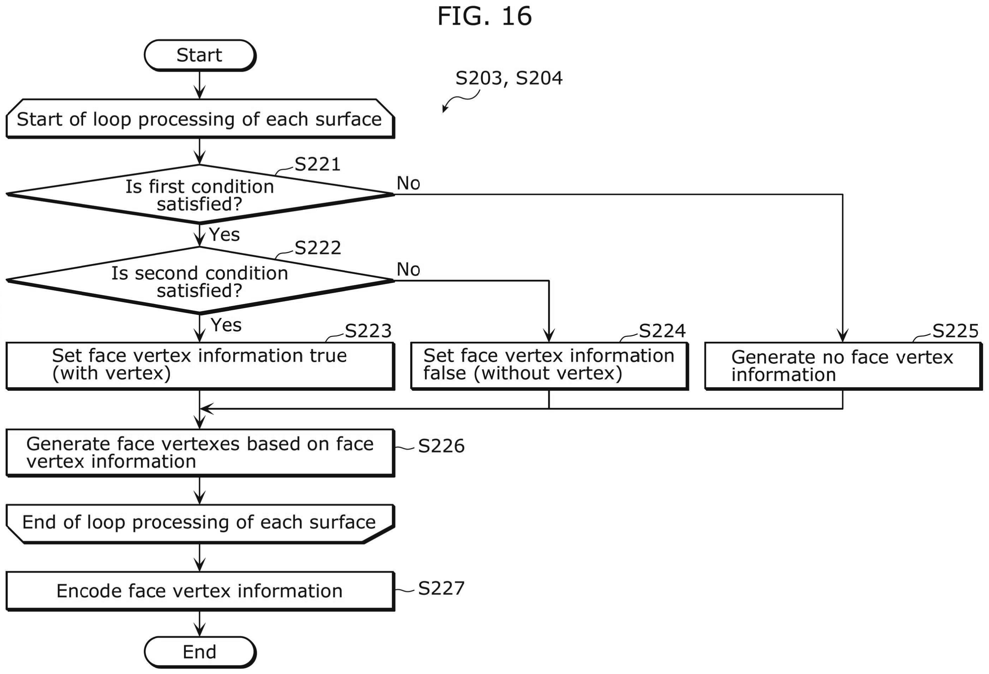

   FIG. 16 is a flowchart of propagation processing of face vertex information according to the embodiment.
[FIG. 17]

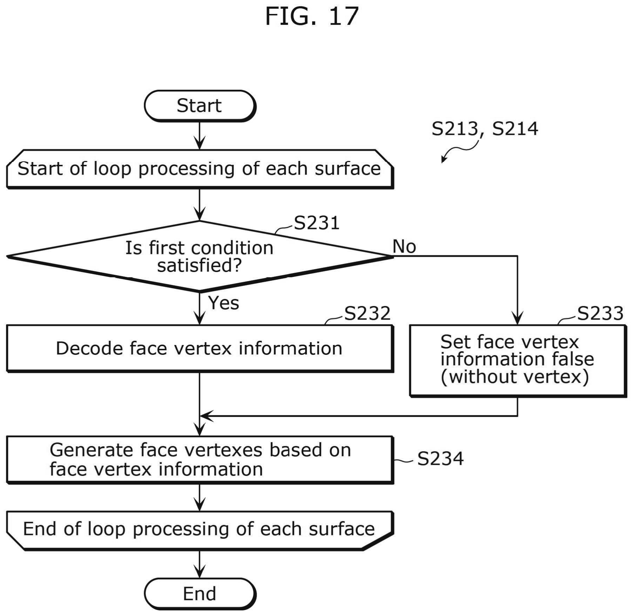

   FIG. 17 is a flowchart of decoding processing of face vertex information according to the embodiment.
[FIG. 18]

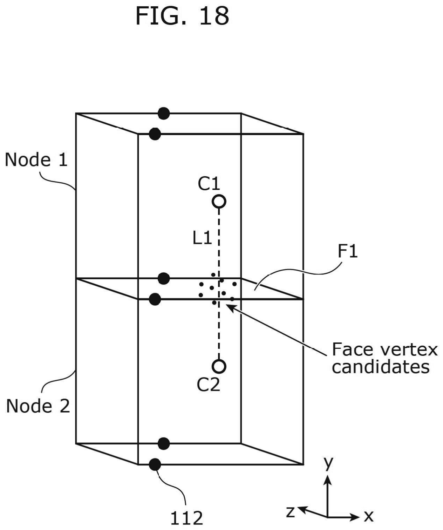

   FIG. 18 is a diagram illustrating an example of a face vertex candidate according to the embodiment.
[FIG. 19]

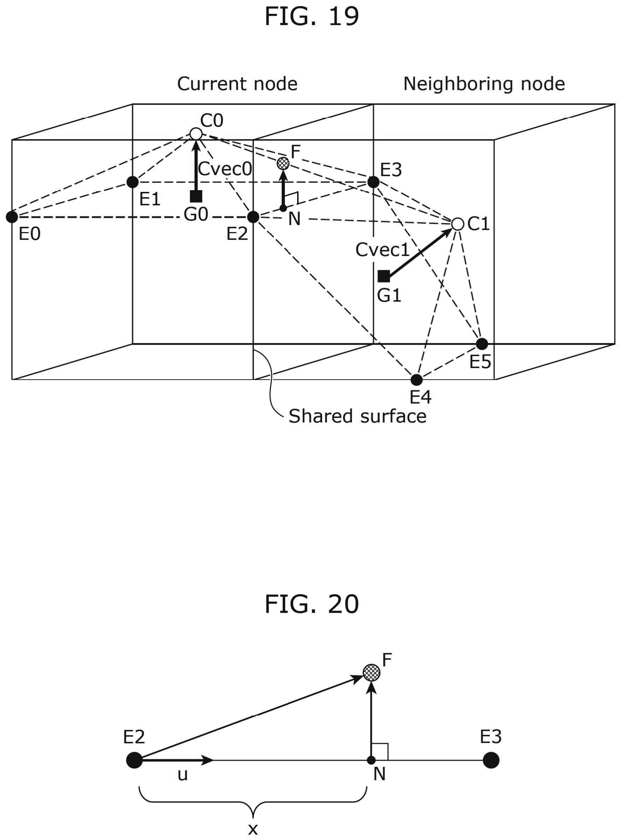

   FIG. 19 is a diagram illustrating an example arrangement of a vertex group according to the embodiment.
[FIG. 20]
   FIG. 20 is a diagram illustrating vector NF according to the embodiment.
[FIG. 21]

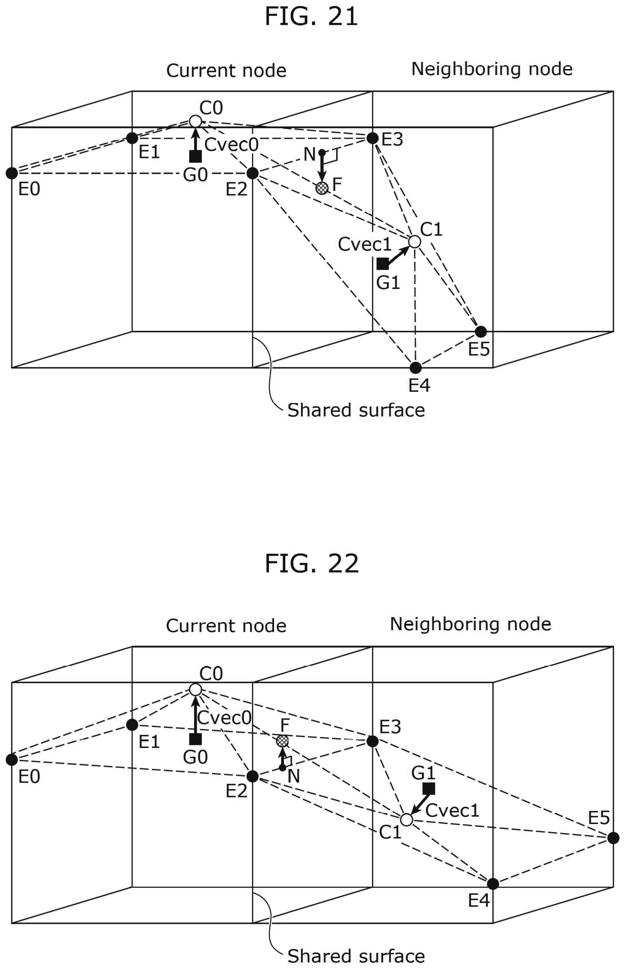

   FIG. 21 is a diagram illustrating an example arrangement of a vertex group according to the embodiment.
[FIG. 22]
   FIG. 22 is a diagram illustrating an example arrangement of a vertex group according to the embodiment.
[FIG. 23]

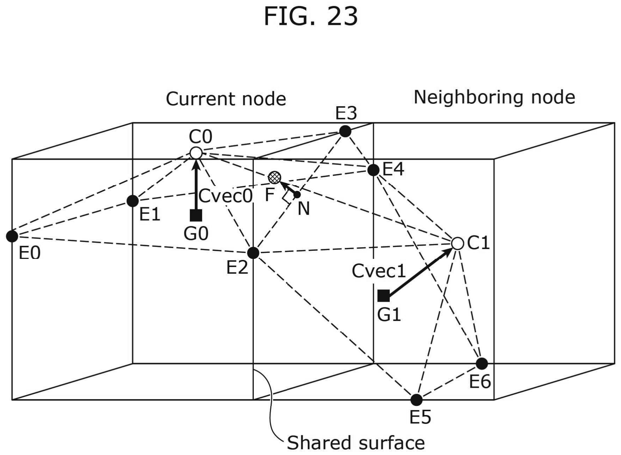

   FIG. 23 is a diagram illustrating an example arrangement of a vertex group according to the embodiment.
[FIG. 24]

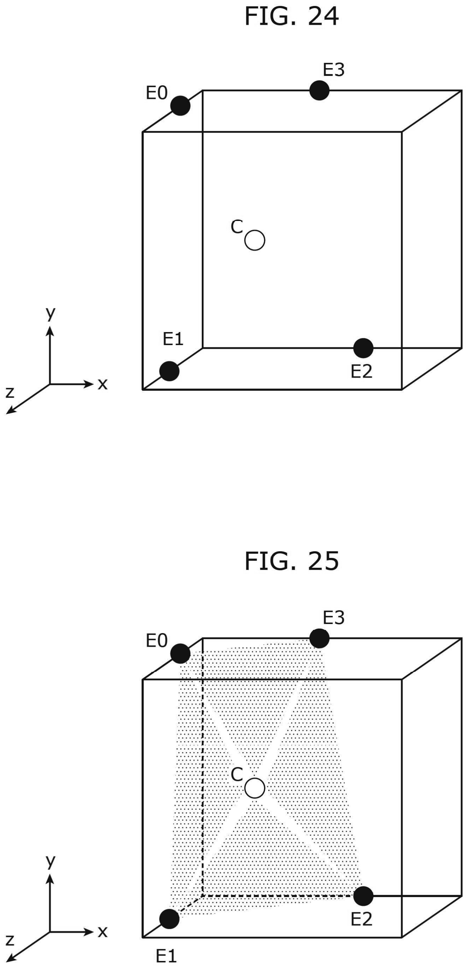

   FIG. 24 is a diagram illustrating an example of edge vertices and a centroid vertex according to the embodiment.
[FIG. 25]
   FIG. 25 is a diagram illustrating an example of correctly generated triangles according to the embodiment.
[FIG. 26]

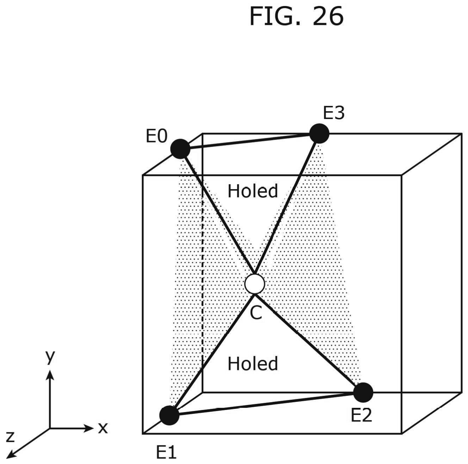

   FIG. 26 is a diagram illustrating an example of incorrectly generated triangles according to the embodiment.
[FIG. 27]

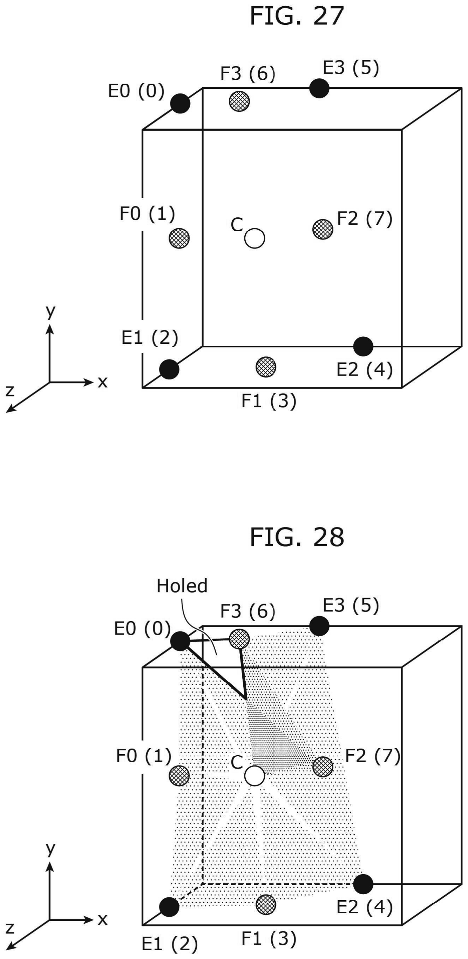

   FIG. 27 is a diagram illustrating an example of edge vertices, a centroid vertex, and face vertices according to the embodiment.
[FIG. 28]
   FIG. 28 is a diagram illustrating an example of triangle generation in a case where simple ordering according to the embodiment is applied.
[FIG. 29]

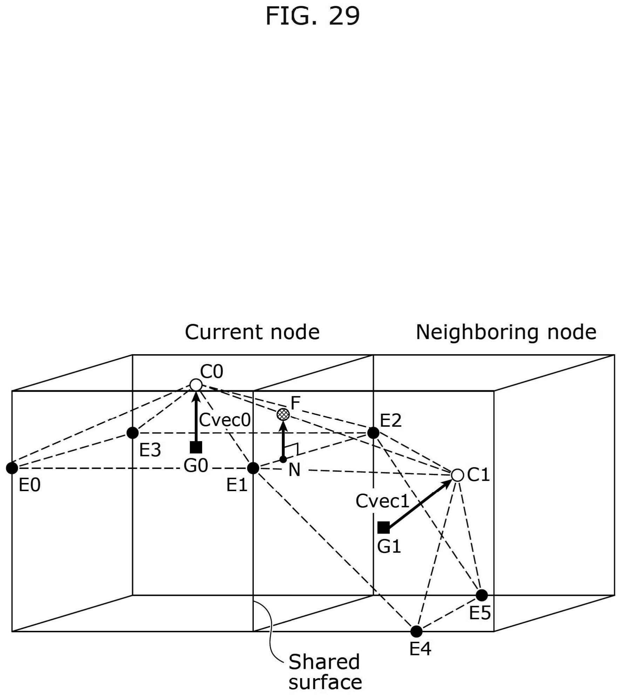

   FIG. 29 is a diagram illustrating an example of edge vertices after simple sorting according to the embodiment is carried out.
[FIG. 30]

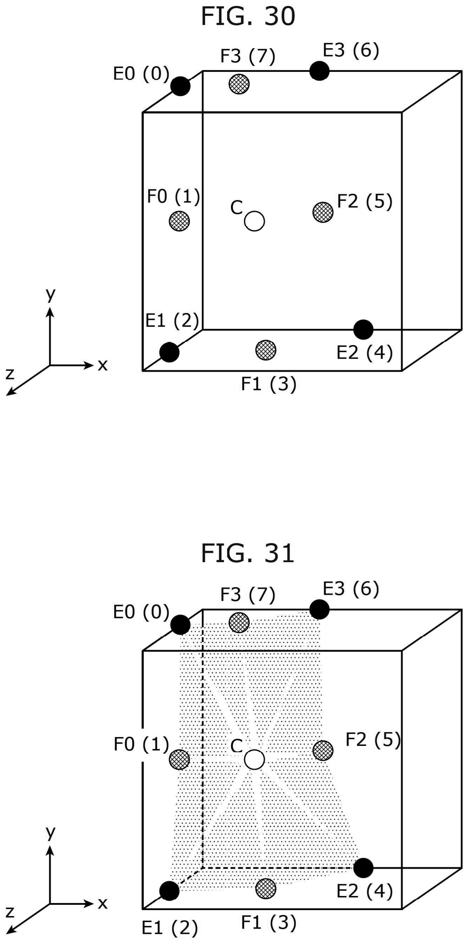

   FIG. 30 is a diagram illustrating an example of edge vertices and face vertices after ordering according to the embodiment.
[FIG. 31]
   FIG. 31 is a diagram illustrating an example of a generated triangle according to the embodiment.
[FIG. 32]

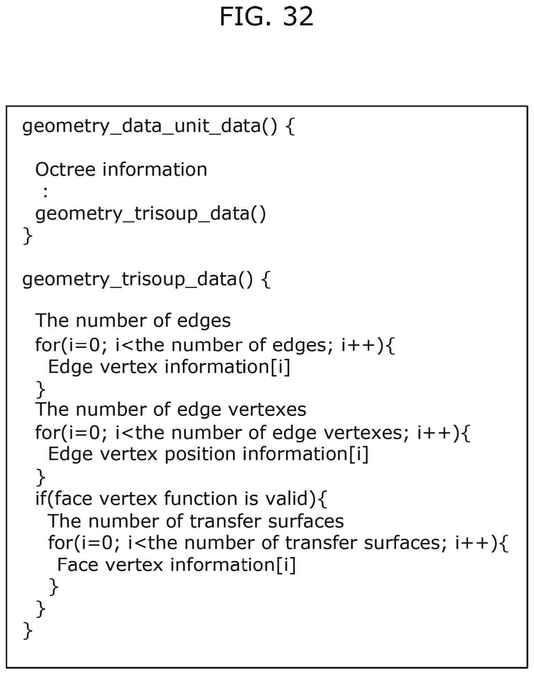

   FIG. 32 is a diagram illustrating an example of a syntax of GDU according to the embodiment.
[FIG. 33]

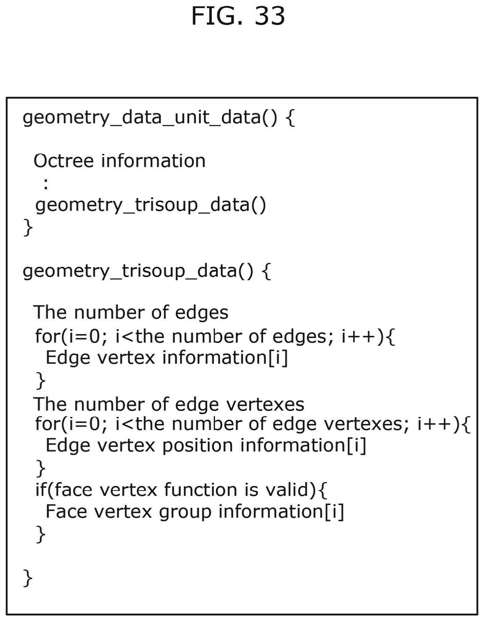

   FIG. 33 is a diagram illustrating a variation of a syntax of GDU according to the embodiment.
[FIG. 34]

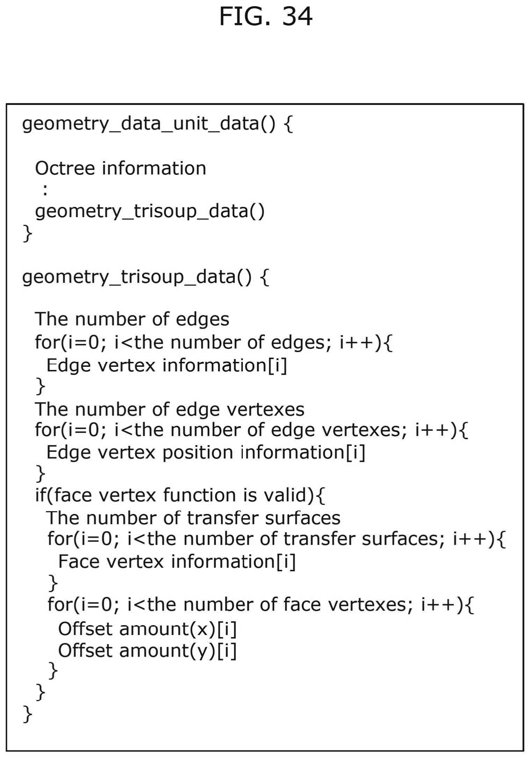

   FIG. 34 is a diagram illustrating a variation of a syntax of GDU according to the embodiment.
[FIG. 35]

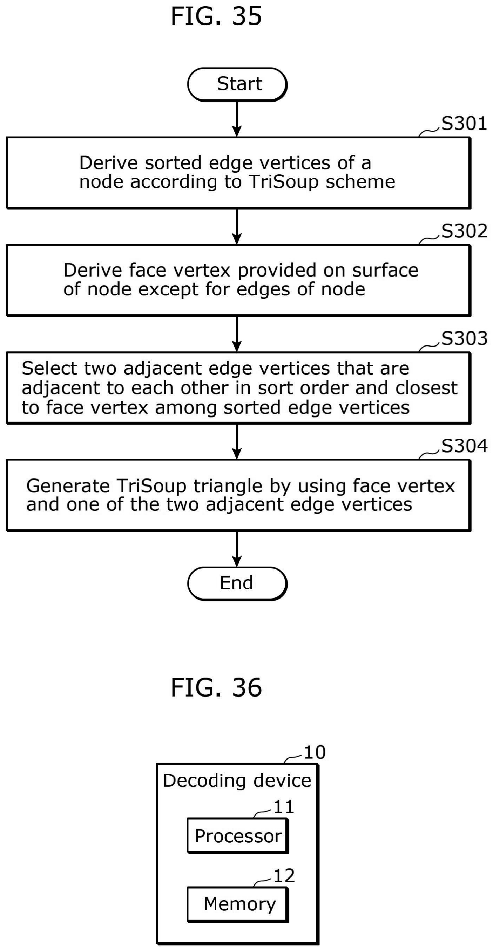

   FIG. 35 is a flowchart of a decoding process according to an embodiment.
[FIG. 36]
   FIG. 36 is a block diagram of a decoding device according to an embodiment.
[FIG. 37]

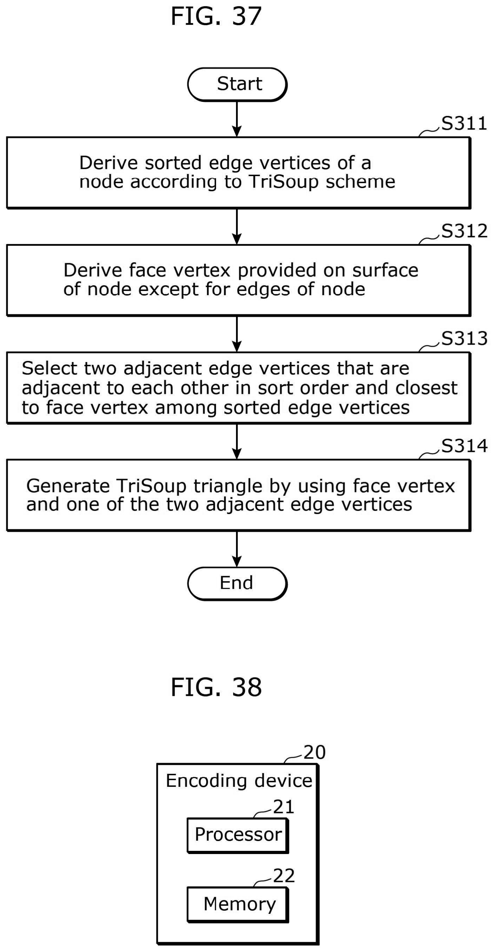

   FIG. 37 is a flowchart of an encoding process according to an embodiment.
[FIG. 38]
   FIG. 38 is a block diagram of an encoding device according to an embodiment.

### [Description of Embodiments]

A decoding method according to an aspect of the present disclosure includes: deriving sorted edge vertices of a node according to a TriSoup scheme; deriving a face vertex provided on a surface of the node except for edges of the node; selecting two adjacent edge vertices that are adjacent to each other in sort order and closest to the face vertex among the sorted edge vertices; and generating a TriSoup triangle by using the face vertex and one of the two adjacent edge vertices.

Accordingly, when face vertices are used in addition to edge vertices, the decoding method can appropriately select, from the edge vertices and the face vertices, a combination of vertices to use in generating the TriSoup triangle. Therefore, the decoding method can improve the accuracy of three-dimensional data that is restored.

For example, an order of the face vertex in the sort order may be set between orders of the two adjacent edge vertices. Accordingly, the decoding method can appropriately select, according to the order that was set, a combination of vertices to be used in generating a TriSoup triangle.

For example, in the deriving of the sorted edge vertices, edge vertices of the node and face vertices of the node may be projected on a plane having a predetermined normal direction, and the edge vertices may be sorted based on values of arctangents related to vectors connecting each of the edge vertices projected on the plane and a centroid vertex. Accordingly, the decoding method can appropriately sort edge vertices.

For example, in the deriving of the sorted edge vertices, edge vertices of the node and centroid vertices of the node may be projected on a plane having a predetermined normal direction. The decoding method may further include, when a first centroid vertex projected on an edge of the node on the plane is included among the centroid vertices projected on the plane: sorting first vertices including the edge vertices and the first centroid vertex; selecting two adjacent edge vertices that are adjacent to each other in sort order among the first vertices sorted, the two adjacent edge vertices being closest to a second face vertex among the centroid vertices, the second face vertex being projected on a part of the node other than the edges on the plane; and generating a TriSoup triangle by using the second face vertex and one of the two adjacent edge vertices. Accordingly, the decoding method can simplify the sorting process for some of the face vertices, and thus the processing amount can be reduced.

For example, in the selecting of the two adjacent edge vertices: midpoints of pairs of edge vertices that are adjacent to each other in the sort order, among the sorted edge vertices, may be calculated; and a pair of edge vertices corresponding to a midpoint that is closest to the face vertex, among the midpoints calculated, may be selected as the two adjacent edge vertices. Accordingly, the decoding method can appropriately select two adjacent edge vertices that are closest to the face vertex.

An encoding method according to an aspect of the present disclosure includes: deriving sorted edge vertices of a node according to a TriSoup scheme; deriving a face vertex provided on a surface of the node except for edges of the node; selecting two adjacent edge vertices that are adjacent to each other in sort order and closest to the face vertex among the sorted edge vertices; and generating a TriSoup triangle by using the face vertex and one of the two adjacent edge vertices.

Accordingly, when face vertices are used in addition to edge vertices, the encoding method can appropriately select, from the edge vertices and the face vertices, a combination of vertices to use in generating the TriSoup triangle. Therefore, the encoding method can improve the accuracy of three-dimensional data that is restored.

For example, an order of the face vertex in the sort order may be set between orders of the two adjacent edge vertices, and orders of the sorted edge vertices and the face vertex that have been set may be used in encoding attribute information of a three-dimensional point. Accordingly, the encoding method can appropriately encode the attribute information of the three-dimensional point by encoding the attribute information using the orders that have been set.

A decoding device according to an aspect of the present disclosure includes: a processor; and memory. Using the memory, the processor: derives sorted edge vertices of a node according to a TriSoup scheme; derives a face vertex provided on a surface of the node except for edges of the node; selects two adjacent edge vertices that are adjacent to each other in sort order and closest to the face vertex among the sorted edge vertices; and generates a TriSoup triangle by using the face vertex and one of the two adjacent edge vertices.

An encoding device according to an aspect of the present disclosure includes: a processor; and memory. Using the memory, the processor: derives sorted edge vertices of a node according to a TriSoup scheme; derives a face vertex provided on a surface of the node except for edges of the node; selects two adjacent edge vertices that are adjacent to each other in sort order and closest to the face vertex among the sorted edge vertices; and generates a TriSoup triangle by using the face vertex and one of the two adjacent edge vertices.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [Embodiment]

Hereinafter, an encoding device (three-dimensional data encoding device) and a decoding device (three-dimensional data decoding device) according to the present embodiment will be described. The encoding device encodes three-dimensional data to thereby generate a bitstream. The decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the position information is represented using an orthogonal coordinate system or a polar coordinate system.

Attribute information indicates color information, reflectance, infrared information, a normal vector, or time-of-day information, for example. One three-dimensional point may have a single item of attribute information or have a plurality of kinds of attribute information.

It should be noted that although mainly the encoding and decoding of position information will be described below, the encoding device may perform encoding and decoding of attribute information.

### [TriSoup scheme]

The encoding device according to the present embodiment encodes position information by using a Triangle-Soup (TriSoup) scheme.

The TriSoup scheme is an irreversible compression scheme for encoding position information on point cloud data. In the TriSoup scheme, an original point cloud being processed is replaced by a set of triangles, and the point cloud is approximated on the planes of the triangles. Specifically, the original point cloud is replaced by vertex information on vertexes (hereinafter also referred to as vertices) within each node, and the vertexes are connected with each other to form a group of triangles. Furthermore, the vertex information for generating the triangles is stored in a bitstream, which is sent to the decoding device.

Now, encoding processing using the TriSoup scheme will be described. FIG. 1 is a diagram illustrating an example of an original point cloud. As shown in FIG. 1, point cloud 102 of an object is in target space 101 and includes points 103.

First, the encoding device divides the original point cloud into an octree up to a predetermined depth. In octree division, a target space is divided into eight nodes (subspaces), and 8-bit information (an occupancy code) indicating whether each node includes a point cloud is generated. A node that includes a point cloud is further divided into eight nodes, and 8-bit information indicating whether these eight nodes each include a point cloud is generated. This processing is repeated up to a predetermined layer.

Here, typical octree encoding divides nodes until the number of point clouds in each node reaches, for example, one or a threshold. In contrast, the TriSoup scheme performs octree division up to a layer along the way and not for layers lower than that layer. Such an octree up to a midway layer is called a trimmed octree.

FIG. 2 is a diagram illustrating an example of a trimmed octree. As shown in FIG. 2, point cloud 102 is divided into leaf-nodes 104 (lowest-layer nodes) of a trimmed octree.

The encoding device then performs the following processing for each leaf-node 104 of the trimmed octree. It should be noted that a leaf-node may hereinafter also be simply referred to as a node. The encoding device generates vertexes on edges of the node as representative points of the point cloud near the edges. These vertexes are called edge vertexes. For example, an edge vertex is generated on each of a plurality of edges (for example, four parallel edges).

FIG. 3 is a diagram illustrating an example of two-dimensional display of leaf-node 104, for example, the xy-plane viewed along the z-direction shown in FIG. 1. As shown in FIG. 3, edge vertexes 112 are generated on edges based on points near the edges, among points 111 within leaf-node 104.

It should be noted that the dotted lines in FIG. 3 along the perimeter of leaf-node 104 represent the edges. Also in this example, each edge vertex 112 is generated at a weighted average of the positions of points within the distance 1 from the corresponding edge (points within each range 113 in FIG. 3). It should be noted that the unit of distance may be, by way of example and not limitation, the resolution of the point cloud. Although the distance (the threshold) is 1 in this example, the distance may be a value other than 1 or may be variable.

The encoding device then generates a vertex inside the node as well, based on a point cloud located in the direction of the normal to the plane that includes edge vertexes. This vertex is called a centroid vertex.

FIGS. 4 and 5 are diagrams for describing a method for generating the centroid vertex. First, the encoding device selects, for example, four points as representative points from a group of edge vertexes. In the example shown in FIG. 4, edge vertexes v1 to v4 are selected. The encoding device then calculates approximate plane 121 passing through the four points. The encoding device then calculates normal n to approximate plane 121 and average coordinates M of the four points. The encoding device then generates centroid vertex C at weighted-average coordinates of one or more points near a half line extending along normal n from average coordinates M (e.g., points within range 122 shown in FIG. 5).

The encoding device then entropy-encodes vertex information, which is information on the edge vertexes and the centroid vertex, and stores the encoded vertex information in a geometry data unit (hereinafter referred to as a GDU) included in the bitstream. It should be noted that, in addition to the vertex information, the GDU includes information indicating the trimmed octree.

FIG. 6 is a diagram illustrating an example of the vertex information. The above processing transforms point cloud 102 into vertex information 123, as shown in FIG. 6.

Now, decoding processing for the bitstream generated as above will be described. First, the decoding device decodes the GDU from the bitstream to obtain the vertex information. The decoding device then connects the vertexes to generate a TriSoup surface, which is a group of triangles.

FIG. 7 is a diagram illustrating an example of the TriSoup surface. In the example shown in FIG. 7, four edge vertexes v1 to v4 and centroid vertex C are generated based on the vertex information. Furthermore, triangles 131 (a TriSoup surface) are generated, each having centroid vertex C and two edge vertexes as its vertexes. For example, a pair of two edge vertexes on a pair of two adjacent edges is selected to form triangle 131 having the selected pair of edge vertexes and the centroid vertex as its vertexes.

FIG. 8 is a diagram for describing point cloud reconstruction processing. The above processing is performed for each leaf-node to generate a three-dimensional model that represents the object with triangles 131, as shown in FIG. 8.

The decoding device then generates points 132 at regular intervals on the surface of triangles 131 to reconstruct the position information on point cloud 133.

### [Example of representation of ridge line of point cloud surface]

According to the TriSoup scheme, the shape of the ridge line (ridge) across the neighboring nodes cannot be reconstructed in some cases. In contrast, the encoding device generates the face vertex on the surface in contact with the neighboring node, and reconstructs the point cloud also on the surface of the triangle generated based on the centroid vertex, the face vertices, and the edge vertices.

For example, in a case where a bent portion of the point cloud distribution (point cloud surface) is distributed within the leaf node, the surface model made by connecting the vertices cannot reproduce the shape of the original point cloud in some cases because the corner of the point cloud surface and the edge do not intersect each other and no vertex is formed at the position of the corner.

FIG. 9 is a diagram illustrating an example of a point cloud in a case where a point cloud is distributed across node 1 and node 2, and a ridge line is formed. As shown in FIG. 9, based on the point cloud distribution close to edges, edge vertices 112 are generated.

FIG. 10 is a diagram illustrating a centroid vertex generation example in this case. As shown in FIG. 10, each centroid vertex 151 is formed in the normal direction of an approximate plane of the edge vertex group.

FIG. 11 is a diagram illustrating a generation example of triangles 131 (TriSoup surface) in this case. As shown in FIG. 11, each triangle 131 is generated by connecting a plurality of vertices (plurality of edge vertices and a centroid vertex). In this case, as illustrated in FIG. 11, the point cloud in the vicinity of the node boundary cannot be reproduced.

This is because the centroid vertex successfully samples the original point cloud surface but the current scheme can create no vertex between two centroid vertices of two neighboring nodes. For example, in a case where a ridge line is continuously distributed in the node along the direction of any of x, y, and z axes, no vertex corresponding to the ridge line is formed because the ridge line is not across any edge. Accordingly, this problem occurs.

In the present embodiment, the encoding device predicts the ridge line of the point cloud surface. Upon determination that two neighboring nodes have the same ridge line, this device transfers, to the decoding device, information for connecting two centroid vertices of the two neighboring nodes by a line segment. This information is, for example, 1-bit information assigned to each surface between nodes.

The decoding device connects the centroid vertices using this information, and generates a new vertex (face vertex) at an intersection between the obtained line segment and a shared surface between the nodes. When generating triangle 131, the decoding device can reproduce the ridge line using the new vertex.

Since the coordinate position of the face vertex is not quantized, a problem of positional deviation due to quantization is not present.

FIG. 12 is a diagram illustrating a face vertex generation example. As shown in FIG. 12, the decoding device can reproduce the ridge line by generating face vertex 161 and generating triangle 131 using face vertex 161.

According to the method described above, the point cloud surface in the vicinity of the node boundary can be reproduced. Accordingly, a decoded point cloud more similar to the original point cloud can be obtained. It should be noted that in the above description, the point cloud surface is only used to describe the problem concerning the ridge line. The ridge line is not required to be actually obtained.

### [Overview of generation, transfer, and reconstruction of face vertex]

First, evaluation and reconstruction of connectivity of centroid vertices are described. The encoding device generates the line segment connecting the centroid vertex of the current node and the centroid vertex of the neighboring node, with respect to each node, and determines the connectivity between the centroid vertices based on the weight for the point cloud adjacent to the intersection between the line segment and the shared surface between the nodes.

The encoding device sets a boolean (bool) value (for example, the face vertex information described above) indicating whether to connect two centroid vertices with respect to this surface and generate the face vertex.

The boolean value of each surface is transferred from the encoding device to the decoding device. For the surface having a boolean value = true, the decoding device generates a face vertex at the position at which the line segment connecting the centroid vertices of the nodes on both the sides of this surface intersects this surface.

FIG. 13 is a diagram illustrating an example of surfaces about which the connectivity evaluation and reconstruction of the centroid vertex among the six surfaces of the node. For example, as shown in FIG. 13, for three surfaces on a side of each axis with a larger coordinate among the six surfaces of the node, the encoding device and the decoding device perform connectivity evaluation and reconstruction of the centroid vertex on both the sides of each of the surfaces.

Next, an overview of reduction of the data amount of the bitstream, and limitation on face information is described. To reduce the transfer data amount, the encoding device sets a condition for face vertex information (set of boolean values) using information known to the decoding device, thus reducing the data amount of face vertex information to be transmitted. It should be noted that the details of the process are described later.

Next, ordering of an inner-node vertex group is described. To generate the TriSoup surface, two edge vertices, or edge vertices and the face vertex are required to be appropriately selected. For example, if edge vertices close to the face vertex are not selected, and far edge vertices are selected, the surface approximating the point cloud is not formed. Furthermore, a face to be approximated is not generated. Accordingly, for example, to provide the surface without opening holes with no gap in the node, ordering using the rotation order for the edge vertices and face vertex group with reference to the centroid vertex is required. It should be noted that the details are described later.

### [Processing flow]

FIG. 14 is a flowchart of encoding processing by the encoding device. First, the encoding device applies octree division to the point cloud and generates the trimmed octree, and generates a plurality of leaf nodes (leaf node group) of the trimmed octree. Furthermore, the encoding device applies arithmetic encoding (entropy encoding) to the octree information indicating the trimmed octree, and stores the encoded octree information in the bitstream (S201).

Next, the encoding device generates the edge vertices and the centroid vertex from the point cloud distribution in the node, for each of the nodes (leaf nodes), applies arithmetic encoding (entropy encoding) to vertex information indicating each item of position information, and stores the encoded vertex information in the bitstream (S202).

Next, only for the surface satisfying a geometry condition among the surfaces of each node, the encoding device generates a face vertex at the position at which the line segment connecting the centroid vertex of the current node and the centroid vertex of the neighboring node intersects the surface (S203).

Next, the encoding device encodes face vertex information on the surface satisfying the geometry condition, and stores the encoded face vertex information in the bitstream (S204). Here, the face vertex information is information indicating whether to connect the centroid on both the sides of the surface to each other and generate the face vertex.

Next, the encoding device performs the processes of following steps S205 to S208 (loop processing) for each of the leaf nodes of the trimmed octree. First, the encoding device applies counterclockwise ordering to the edge vertices and the face vertices in the node (S205). Next, the encoding device connects the vertex group (the edge vertices, centroid vertex, and face vertices) in the node, and generates a triangle (TriSoup surface) (S206).

Next, the encoding device generates a plurality of points on the surface of the triangle (S207). Next, the encoding device makes the decoded points in the node unique with their coordinate values, and adds these points to the decoded point cloud (S208). Here, making unique means exclusion of points with redundant coordinate values. Thus, the loop processing for the current node is finished.

FIG. 15 is a flowchart of decoding processing by the decoding device. First, the decoding device applies arithmetic decoding (entropy decoding) to the bitstream and obtains the octree information, generates the trimmed octree using the octree information, and generates a plurality of leaf nodes (leaf node group) (S211).

Next, the decoding device applies arithmetic decoding to the bitstream and obtains the vertex information indicating the positions of the edge vertices and the centroid vertex (S212).

Next, only for the surface satisfying the geometry condition among the surfaces of each leaf node, the decoding device applies arithmetic decoding to the face vertex information (S213). Next, the decoding device generates the face vertex, based on the face vertex information (S214).

Next, the decoding device performs the processes of following steps S215 to S218 (loop processing) for each of the leaf nodes of the trimmed octree. First, the decoding device applies counterclockwise ordering to the edge vertices and the face vertices in the node (S215). Next, the decoding device connects the vertex group (the edge vertices, centroid vertex, and face vertices) in the node, and generates a triangle (TriSoup surface) (S216).

Next, the decoding device generates a plurality of points on the surface of the triangle (S217). Next, the decoding device makes the decoded points in the node unique with their coordinate values, and adds these points to the decoded point cloud (S218). Here, making unique means exclusion of points with redundant coordinate values. Thus, the loop processing for the current node is finished.

FIG. 16 is a flowchart of transfer processing of face vertex information (details of steps S203 and S204 illustrated in FIG. 14).

The encoding device performs the processes of following steps S221 to S226 (loop processing) for the surfaces of each node. First, the encoding device determines whether the current surface as the processing target satisfies a first condition for face vertex generation (S221). It should be noted that the first condition is a limiting condition based on geometry information for reducing the data amount of an after-mentioned bitstream, and described in detail later. Furthermore, by providing this condition, surfaces where no face vertex can be generated can be excluded based on the positional relationship between the node, edge vertices, and centroid vertex. Accordingly, the transfer information amount can be reduced.

If the first condition is satisfied (Yes in S221), the encoding device determines whether the current surface satisfies a second condition for generating the face vertex (S222). It should be noted that the second condition is evaluation of the weight for the point cloud adjacent to the position of the face vertex candidate, in evaluation of the connectivity of the centroid vertex described later. It should be noted that the details are described later. By providing the condition, the face vertex based on the distribution of the ridge line shape of the point cloud on the surface can be generated.

If the second condition is satisfied (Yes in S222), the encoding device sets the face vertex information on the current surface to "true (with the vertex)", and accumulates the face vertex information that is to be transferred (S223). On the other hand, if the second condition is not satisfied (No in S222), the face vertex information on the current surface is set to "false (without the vertex)", and accumulates the face vertex information that is to be transferred (S224).

If the first condition is not satisfied (No in S221), the encoding device does not generate the face vertex information on the current surface, regards it as "false", and does not accumulate the face vertex information that is to be transferred (S225).

Next, the encoding device generates a face vertex on the current surface based on the face vertex information (true/false) (S226). That is, the encoding device generates the face vertex on the current surface if the face vertex information is "true", and does not generate the face vertex on the current surface if the face vertex information is "false" (or regarded as "false"). Thus, the loop processing for the current surface is finished.

Next, the encoding device encodes the accumulated face vertex information items, and stores the encoded face vertex information items in the bitstream (S227).

FIG. 17 is a flowchart of face vertex information decoding processing (details of steps S213 and S214 illustrated in FIG. 15).

The decoding device performs the processes of following steps S231 to S234 (loop processing) for the surfaces of each node. First, the decoding device determines whether the current surface satisfies a first condition for face vertex generation (S231). It should be noted that the first condition is the same as the first condition in step S221 illustrated in FIG. 16.

If the first condition is satisfied (Yes in S231), the decoding device decodes the bitstream and obtains face vertex information indicating whether to generate the face vertex on the current surface (S232). Accordingly, it is determined whether to generate the face vertex on the current surface ("true" or "false").

Furthermore, if the first condition is not satisfied (No in S231), the decoding device does not decode the bitstream and obtain the face vertex information on the current surface, and sets the face vertex information on the current surface to "false" (S233).

Next, the decoding device generates the face vertex on the current surface based on the face vertex information (true/false) (S234). That is, the decoding device generates the face vertex on the current surface if the face vertex information is "true", and does not generate the face vertex on the current surface if the face vertex information is "false". Thus, the loop processing for the current surface is finished.

By defining the first condition (the condition preliminarily defined in the encoding device and the decoding device and unchangeable) before the second condition of whether to generate the face vertex as described above, flag information can be prevented from being transferred.

By combining the predefined first condition (unchangeable condition) with the second condition that can be flexibly set in the encoding device and notified using the flag (changeable condition), both data amount reduction and setting flexibility can be achieved.

### [Connectivity evaluation and reconstruction of centroid vertex]

The encoding device evaluates the weight for the point cloud on the line segment connecting the centroid vertices, and if the weight for the point cloud adjacent to the face vertex candidate is equal to or larger than a threshold, the encoding device sets the candidate as the face vertex. Here, the candidate is the intersection between the line segment connecting the centroid vertices and the surface. Furthermore, the weight for the point cloud adjacent to the face vertex candidate is the number of points included in a region with a predetermined distance from the face vertex candidate or the density.

FIG. 18 is a diagram illustrating an example of the face vertex candidate. In this example, the intersection between line segment L1 connecting centroid vertex C1 of node 1 and centroid vertex C2 of node 2, and shared surface F1, is determined as the face vertex candidate.

The encoding device assigns the bitstream one-bit information (centroid vertex information) that means "whether to connect the centroid vertices on both the sides of the surface in the node and generate the vertex on the surface" about the surface, as transfer information to the decoding device. Furthermore, for each of all the surfaces, the encoding device generates this one-bit information item, and stores the generated one-bit information items in the bitstream.

The decoding device obtains the face vertex information besides the node position information, and position information on the edge vertices and the centroid vertex. For each surface, the decoding device generates the face vertex, based on the corresponding face vertex information.

It should be noted that the encoding device herein sets the intersection between the line segment of the centroid vertices and the surface at the position of the face vertex, but may generate the face vertex at a position deviating from the position of the intersection, based on the distribution of the point cloud, for example. In this case, the encoding device stores, in the bitstream, the offset amount between the positions of the intersection and the face vertex on the surface besides the one-bit information. The offset amount is represented as, for example, a two-dimensional value. That is, information indicating the position of the face vertex may be stored in the bitstream. It should be noted that the information indicating the position of the face vertex is not limited to the offset amount, and may be coordinate information, or the coordinate difference from another vertex (the edge vertices or the centroid vertex) or a vector.

According to this scheme, the position of the face vertex becomes one in which the shape of the ridge line of the point cloud is more appropriately reflected while maintaining the connectivity of the point cloud surface between the nodes. Thus, the reconstructed point cloud having a high quality can be obtained.

### [Reduction of bitstream data amount]

The encoding device sets a condition for every surface using information known to the decoding device, and reduces the number of face vertex information items to be transferred. Specifically, since the position information items on the edge vertices and the centroid vertices have already been known, the decoding device uses them and excludes pairs of centroid vertices that cannot be connected to each other, based on the geometry relationship.

For example, the encoding device limits generation of the face vertex information by AND (logical product) of following five conditions (a) to (e). It should be noted that the encoding device may use only some of these conditions, or further combine another condition.

(a) The current node includes centroid vertex (C0). (b) A node is present adjacent to the current node (presence of neighboring node). It should be noted that presence of a neighboring node in any of x, y, and z axes may be employed. (c) The neighboring node includes centroid vertex (C1). This condition is set because if the number of edge vertices is small, no centroid vertex is sometimes generated. (d) The number of edge vertices on the shared surface that the nodes share is two or three. This condition assumes a case where a point cloud is present in a manner of a ridge line.

(e) The surface in a case where the face vertex is generated swells more than the original surface. Here, the surface is a surface made up of a plurality of triangles (TriSoup surfaces). Specifically, if three vectors that are (1) vector Cvec0 from center of balance G0 of the edge vertex group in the current node to centroid vertex C0, (2) vector Cvec1 from center of balance G1 of the edge vertex group in the neighboring node to centroid vertex C1, and (3) vector NF from face vertex candidate F to N that is the foot of the perpendicular on the line segment formed by two edge vertices on the shared surface are not reversed (both the inner product of vector Cvec0 and vector NF, and the inner product of vector Cvec1 and vector NF are positive), the face vertex information on the current surface is set as a transfer target.

FIG. 19 is a diagram illustrating an example arrangement of the vertex group where the face vertex is generated. FIG. 20 illustrates vector NF. The example illustrated in FIG. 19 is an example where two edge vertices are present on the shared surface, and the face vertex is generated, and the surface swells accordingly, and the face vertex information is transferred.

Vector u illustrated in FIG. 20 is a unit vector of vectors E2 and E3. x = E2F·u, and NF = E2F - xu hold. If Cvec0·NF > 0 and Cvec1·NF > 0, the surface swells.

FIG. 21 is a diagram illustrating an example arrangement of the vertex group where two edge vertices are present on the shared surface, and the surface does not swell. In this case, the face vertex information is not transferred.

FIG. 22 is a diagram illustrating an example arrangement of the vertex group where two edge vertices are present on the shared surface, and the surface does not swell. In this case, the face vertex information is not transferred.

FIG. 23 is a diagram illustrating an example arrangement of the vertex group where three edge vertices are present on the shared surface, and the surface swells. In this case, the face vertex information is transferred. In the example illustrated in FIG. 23, among edge vertices E2, E3, and E4, a pair of edge vertices (E2 and E3) where the midpoint of the line segment formed by adjacent two and the face vertex candidate are closest are selected, and point N is determined.

It should be noted that the determination as described above is not necessarily performed. For example, in the case illustrated in FIG. 22, it may be determined that the point cloud surface swells.

According to another condition, if the certain constant number of face vertices are continuously generated in the precedent reconstructed node continuous to the neighboring node in the reconstruction process, the encoding device may determine that the face vertex is generated also in the current node. As determination that the point cloud surface swells, instead of the sign of the inner product of the vectors described above, the encoding device may actually calculate the volume of the point cloud surface, and determine that the surface swells if the volume increases.

It should be noted that the determination corresponds to the first condition in step S221 illustrated in FIG. 16 and in step S231 illustrated in FIG. 17. Furthermore, here, the example where the encoding device performs determination is described. However, similar determination is performed also in the decoding device.

### [Ordering of vertex group in node]

A plurality of triangles (TriSoup surfaces) are generated in the node for reconstructing the point cloud. In this case, not to fail to develop triangles, the vertex group is required to be sequentially selected from the end. Specifically, the decoding device performs ordering for the edge vertices and the face vertices according to the rotation order centered at the centroid vertex. The decoding device sequentially selects every two points based on the set order, and generates a triangle with three points that are the selected two points and the centroid vertex. Accordingly, triangles can be generated in the node without any gap.

However, the existing method uses the assumption that the ordering target is only edge vertices on the node frames, projects the vertex group from the main axis (any of x, y, and z axes), and successfully achieves ordering by simple sorting. In the present embodiment, the face vertex is generated on the surface of the node. Accordingly, the ordering target is not limited to the node frames (edges), and simple sorting is not achieved.

FIGS. 24 to 28 are diagrams for describing this problem. FIG. 24 is a diagram illustrating an example of the edge vertices and the centroid vertex. FIG. 25 is a diagram illustrating an example of correctly generated triangles. FIG. 26 is a diagram illustrating an example of incorrectly generated triangles.

For example, as shown in the example illustrated in FIG. 24, the edge vertices are ordered. For example, the decoding device projects the edge vertices in the x-axis direction, and performs ordering. Specifically, on a projection plane (an xy plane in this example) on which edge vertices and a centroid vertex are projected, the decoding device performs the ordering of the edge vertices in a predetermined rotation direction (clockwise or counterclockwise) order centered on the centroid vertex. For example, the decoding device calculates the angles formed between a reference direction (for example, the x axis direction, or the like) on the projection plane and vectors from the centroid vertex to the respective edge vertices, and calculates the arctangent (arctan) for each of the angles. The decoding device applies the ordering to the edge vertices in an order (ascending order or descending order) of the obtained arctangents.

Next, as shown in FIG. 25, the decoding device generates each triangle with a combination of the centroid vertex and two edge vertices adjacent to each other. It should be noted that the decoding device may select a projection direction for projecting edge vertices, from among the x-axis direction, the y-axis direction, and the z-axis direction, according to the method described below. The decoding device performs, for each of the x-axis direction, the y-axis direction, and the z-axis direction, the projecting and ordering of the edge vertices, and the generating of triangles, and selects, as the projection direction, the axis direction for which the total of the area of the triangle generated is largest, among the x-axis direction, the y-axis direction, and the z-axis direction. It should be noted that the method for determining the axis direction in which projection is to be performed is not limited to such method.

On the other hand, as illustrated in FIG. 26, failed ordering of the edge vertices opens holes in the node.

FIG. 27 is a diagram illustrating an example of the edge vertices, the centroid vertex, and the face vertices. FIG. 28 is a diagram illustrating an example of triangle generation when simple sorting is applied to this case.

For example, in a case of applying simple sorting to the vertex group including the face vertices, ordering illustrated in FIG. 27 is performed. It should be noted that the numerical values in parentheses indicate the order set by the ordering. In this case, a hole is formed as illustrated in FIG. 28. In this case, the order of face vertex F2 should be set to (5) but is actually set to (7), which causes formation of the hole.

In contrast, in this embodiment, the decoding device performs simple sorting of edge vertices (the above-described ordering of edge vertices), then selects two consecutively numbered edge vertices that are closest to a face vertex, and inserts the order of the face vertex between the orders of the selected two consecutively numbered edge vertices, to thereby perform the ordering of edge vertices and face vertices.

FIG. 29 to FIG. 31 are diagrams for describing this process. First, the decoding device performs the ordering of the edge vertices (E0 to E3) by sorting them counterclockwise using the simple sorting described above. In other words, ordering of the edge vertices is performed in the order of edge vertices E0, E1, E2, E3. FIG. 29 is a diagram illustrating an example of edge vertices E0 to E3 of the current node after this simple sorting has been performed.

Next, the decoding device inserts the order of face vertex F in between the order of the edge vertices. First, the decoding device determines two edge vertices that are closest to face vertex F. In other words, the decoding device determines, from among edge vertices E0 to E4, a pair of edge vertices that are adjacent to each other in order after the ordering and closest in distance to face vertex F. Specifically, the decoding device calculates the coordinates (three-dimensional coordinates) of the midpoint of each of the pairs of edge vertices that are adjacent in the order of the edge vertices (in this example, the pair of E0 and E1, the pair of E1 and E2, and the pair of E3 and E4). Next, the decoding device calculates the distance between each of the calculated midpoints and face vertex F (distance in a three-dimensional space), and determines the pair having the shortest calculated distance as the pair of edge vertices that are closest in distance to face vertex F.

In the example illustrated in FIG. 29, the pair of edge vertices E1 and E2 are determined to be the pair that are closes to face vertex F. Next, the decoding device sets the order of face vertex F in between the orders of the determined pair of edge vertices E1 and E2.

It should be noted that, as described in the foregoing [Reduction of bitstream data amount], in the case of calculating for vector NF, the pair of edge vertices that are closest in distance to face vertex F are determined in such calculation. In this case, instead of the above-described mathematical operation for the midpoints, the decoding device may determine the pair of edge vertices determined during the calculation of vector NF as the pair of edge vertices that are closest in distance to face vertex F.

Furthermore, these processes are repeated for each face vertex. FIG. 30 is a diagram illustrating an example of edge vertices and face vertices after this ordering process. As illustrated in FIG. 30, with the ordering, edge vertices and the centroid vertex can be sorted appropriately. It should be noted that the numerical value in parentheses illustrated in FIG. 30 indicates the order that is set by the ordering. For example, E1(2) illustrated in FIG. 30, indicates that the order after simple sorting is "1", but the order after the above-described ordering process is "2".

Next, following the order after the ordering, the decoding device generates a triangle using the centroid vertex and the vertex pair (edge vertex or face vertex) that are adjacent in the order. By repeating this process for each pair of vertices that are adjacent in the order, a plurality of triangles are generated. FIG. 31 is a diagram illustrating an example of triangles generated according to the order after the ordering. As illustrated in FIG. 31, by using the ordering, triangles can be appropriately generated.

It should be noted that the decoding device may project face vertices in the above-described projection direction, and perform simple sorting on the face vertices located on the node frame (edges of the node in the projection plane) in the same manner as with the edge vertices. Specifically, the decoding device performs simple sorting on first vertices including one or more face vertices located on the node frame in the projection plane and a plurality of edge vertices. The decoding device performs the above-described ordering process on each of one or more second face vertices that are not located on the node frame. Specifically, the decoding device determines, from among pairs of first vertices that are adjacent in the order of the first vertices that have undergone the ordering, the pair that is closes to the second face vertex, and sets the order of the second face vertex in between the orders of the pair of first vertices determined.

It should be noted that the ordering process and the triangle generation process described above, may be performed in the encoding device as a point cloud reconstruction process. Furthermore, the position information of three-dimensional points reconstructed in this manner may be used in the encoding process of the attribute information of the three-dimensional points. Furthermore, the order of the edge vertices and the face vertices set above may be used in the encoding process of attribute information. For example, the encoding order (decoding order) of attribute information of vertices and/or three-dimensional points may be set based on such order. Alternatively, the vertex or three-dimensional point to be referred to during predictive encoding of attribute information may be determined based on such order.

### [Syntax]

In relation to reduction of the data amount of the bitstream, information to be transferred from the encoding device to the decoding device for face vertex reconstruction is one-bit information (face vertex information) indicating whether to generate a face vertex on each face to which a limitation is provided based on the geometry.

FIG. 32 is a diagram illustrating a syntax example of GDU (geometry_data_unit_data) included in the bitstream. GDU includes octree information, and geometry_trisoup_data. The geometry_trisoup_data includes the number of edges, edge vertex information, the number of edge vertices, edge vertex position information, the number of transfer surfaces, and face vertex information.

Octree information is information indicating the configuration of a trimmed octree, and information indicating the positions of leaf-nodes included in the trimmed octree.

The number of edges indicates the number of unique edges. It should be noted that a unique edge is any edge except for edges having overlapping coordinates. Edge vertex information is provided for each edge, and edge vertex information [i] indicates whether an edge vertex is located on i-th edge. For example, a value of 0 indicates the absence of an edge vertex, and a value of 1 indicates the presence of an edge vertex.

The number of edge vertices indicates the number of vertices on an edge, that is, the number of edge vertices. Edge vertex position information is provided for each edge vertex, and edge vertex position information [i] indicates the position of an i-th edge vertex.

The number of transfer surfaces indicates the total number of information items (face vertex information) on the surface to be transferred. The face vertex information is provided for each surface. The face vertex information [i] is one-bit information indicating whether to generate a face vertex on the i-th surface (whether a face vertex is present). For example, a value of 0 indicates that no face vertex is generated, and a value of 1 indicates that a face vertex is generated.

Furthermore, the number of transfer surfaces and the face vertex information are included in the bitstream if the face vertex function is valid, and are not included in the bitstream if the face vertex function is invalid. The face vertex function is a process of generating the face vertex described above.

For example, a flag indicating whether the face vertex function is valid or invalid is provided, and based on the flag, it is determined whether the face vertex function is valid or invalid. The flag may be stored in GPS or GDU header, for example.

Furthermore, the validity of the face vertex function may be set for each node. In this case, a plurality of flags corresponding to respective nodes may be stored in the GDU header.

FIG. 33 is a diagram illustrating a variation of the syntax of GDU. The syntax illustrated in FIG. 33 is different from the syntax illustrated in FIG. 32 in that GDU includes face vertex group information instead of the number of transfer surfaces and the face vertex information.

The face vertex group information indicates whether to generate a face vertex on each of surfaces. That is, the face vertex group information is information in which the face vertex information items illustrated in FIG. 32 are combined. Furthermore, the face vertex group information is included in the bitstream if the face vertex function is valid, and is not included in the bitstream if the face vertex function is invalid.

According to the syntax illustrated in FIG. 33, GDU does not include the number of transfer surfaces. Here, node information for applying a limitation based on the geometry to each surface, position information on the edge vertices, and position information on the centroid vertex have already been known to the decoding device. Consequently, the decoding device can calculate the number of information items on the surfaces to be actually transferred (the number of transfer surfaces), by applying the limitation based on the geometry to every surface acquired from the neighboring relationship of the node.

FIG. 34 is a diagram illustrating a variation of the syntax of GDU. The syntax illustrated in FIG. 34 is a syntax example in a case of generating the face vertex at a position deviating from the intersection between the line segment connecting the two centroid vertices and the surface, as described above. In comparison with the syntax illustrated in FIG. 32, in the syntax illustrated in FIG. 34 GDU further includes offset amount (x) and offset amount (y).

Offset amount (x) and offset amount (y) are provided for each face vertex. Offset amount (x) [i] indicates the offset amount of the i-th face vertex in the x-axis direction between the intersection and this face vertex. Offset amount (y) [i] indicates the offset amount of the i-th face vertex in the y-axis direction between the intersection and this face vertex. That is, offset amount (x) and offset amount (y) indicate the two-dimensional offset amount from the intersection to the face vertex.

For example, the encoding device may quantify the two-dimensional offset amount, and then store the quantized amount in the bitstream. In this case, the bitstream includes a quantization parameter used for quantization. The decoding device inversely quantizes the quantized offset amount included in the bitstream using the quantization parameter, and reconstructs the original offset amount.

### [Other]

In the flowchart illustrated in FIG. 17, the decoding device generates the face vertex if the received face vertex information is true, but may generate the face vertex irrespective of the face vertex information. For example, the encoding device need not store the face vertex information in the bitstream, the decoding device may generate the face vertex if the first condition is satisfied, and generate no face vertex if the first condition is not satisfied.

Furthermore, in the flowchart illustrated in FIG. 16, the encoding device determines the value (true or false) of the face vertex information using the first condition and the second condition, but may determine the value of the face vertex information using only one of the first condition and the second condition.

According to the ordering of the vertex group in the node, the rotation axis passing through the centroid vertex is obtained from the outer product of the normal vector of the plane made up of the edge vertex group and any coordinate axis. However, the method of obtaining the rotation axis for ordering the vertex group (edge vertices and face vertices) is not limited thereto. For example, the vertex group may be projected in the direction of any axis passing through the centroid vertex, and the axis direction may be determined such that the minimum value of the distance between the projected point and the axis can be larger than a predetermined value. Alternatively, the axis direction may be determined such that the sum of squares of the distances can be larger than a predetermined value.

In reduction of the data amount of the bitstream, the boolean value (one-bit face vertex information) is transferred. Alternatively, information in another format may be transferred. For example, the face vertex information may indicate three or more values. For example, a value of 0 may indicate "no face vertex is generated", a value of 1 may indicate "a face vertex is generated", and a value of 2 may indicate "a face vertex is generated depending on the capacity of the decoding device". Alternatively, in the case of using a boolean value, if the boolean value is true, the decoding device may determine whether to generate a face vertex depending on the capacity of the decoding device.

### [Conclusion]

As described above, a decoding device (three-dimensional data decoding device) according to the embodiment performs the process illustrated in FIG. 35. The decoding device derives sorted edge vertices of a node according to a TriSoup scheme (S301); derives a face vertex provided on a surface of the node except for edges of the node (S302); selects two adjacent edge vertices that are adjacent to each other in sort order and closest to the face vertex among the sorted edge vertices (S303); and generates a TriSoup triangle by using the face vertex and one of the two adjacent edge vertices (S304). For example, the decoding device generates a TriSoup triangle by using one of the two adjacent edge vertices, the face vertex, and a centroid vertex, and generates a TriSoup triangle by using the other of the two adjacent edge vertices, the face vertex, and the centroid vertex.

Accordingly, when face vertices are used in addition to edge vertices, the decoding device can appropriately select, from the edge vertices and the face vertices, a combination of vertices to use in generating the TriSoup triangle. Therefore, the decoding device can improve the accuracy of three-dimensional data that is restored.

It should be noted that the decoding device may generate a TriSoup triangle by using the face vertex, and one edge vertex that is closest to the face vertex. For example, the decoding device may generate a TriSoup triangle by using the one edge vertex, the face vertex, and a centroid vertex. Moreover, as described above, since the method of selecting two adjacent edge vertices can generate TriSoup triangles without omission compared to the method of selecting the closest one edge vertex, the occurrence of missing a TriSoup triangle can be predicted. Therefore, by using the method of selecting two adjacent edge vertices, the restoration accuracy of the original point cloud can be improved more than with the method of selecting only the closest one edge vertex.

For example, an order of the face vertex in the sort order is set between orders of the two adjacent edge vertices. For example, the decoding device generates a TriSoup triangle using a centroid vertex and a pair of vertices that are adjacent in the orders of the face vertex and the edge vertices that have been set.

Accordingly, the decoding device can appropriately select, according to the order that was set, a combination of vertices to be used in generating a TriSoup triangle.

For example, in the deriving of the sorted edge vertices (S301), the decoding device projects edge vertices of the node and face vertices of the node on a plane having a predetermined normal direction, and sorts the edge vertices based on values of arctangents related to vectors connecting each of the edge vertices projected on the plane and a centroid vertex. Accordingly, the decoding device can appropriately sort edge vertices.

For example, in the deriving of the sorted edge vertices (S301), the decoding device projects edge vertices of the node and centroid vertices of the node on a plane having a predetermined normal direction. When a first centroid vertex projected on an edge of the node on the plane is included among the centroid vertices projected on the plane, the decoding device further: sorts first vertices including the edge vertices and the first centroid vertex; selects two adjacent edge vertices that are adjacent to each other in sort order among the first vertices sorted, the two adjacent edge vertices being closest to a second face vertex among the centroid vertices, the second face vertex being projected on a part of the node other than the edges on the plane; and generates a TriSoup triangle by using the second face vertex and one of the two adjacent edge vertices.

Accordingly, the decoding method can simplify the sorting process for some of the face vertices, and thus the processing amount can be reduced.

For example, in the selecting of the two adjacent edge vertices (S303): the decoding device calculates midpoints of pairs of edge vertices that are adjacent to each other in the sort order, among the sorted edge vertices; and selects a pair of edge vertices corresponding to a midpoint that is closest to the face vertex, among the midpoints calculated, as the two adjacent edge vertices. Accordingly, the decoding device can appropriately select two adjacent edge vertices that are closest to the face vertex.

For example, in the deriving of the sorted edge vertices (S301), edge vertices of the node are sorted, and face vertices of the node are not sorted.

FIG. 36 is a block diagram of decoding device 10. For example, decoding device 10 includes processor 11 and memory 12, and processor 11 performs the above process using memory 12.

Furthermore, an encoding device (three-dimensional data encoding device) according to the embodiment performs the process illustrated in FIG. 37. The encoding device: derives sorted edge vertices of a node according to a TriSoup scheme (S311); derives a face vertex provided on a surface of the node except for edges of the node (S312); selects two adjacent edge vertices that are adjacent to each other in sort order and closest to the face vertex among the sorted edge vertices (S313); and generates a TriSoup triangle by using the face vertex and one of the two adjacent edge vertices (S314). For example, the encoding device generates a TriSoup triangle by using one of the two adjacent edge vertices, the face vertex, and a centroid vertex, and generates a TriSoup triangle by using the other of the two adjacent edge vertices, the face vertex, and the centroid vertex.

Accordingly, when face vertices are used in addition to edge vertices, the encoding device can appropriately select, from the edge vertices and the face vertices, a combination of vertices to use in generating the TriSoup triangle. Therefore, the encoding device can improve the accuracy of three-dimensional data that is restored.

For example, an order of the face vertex in the sort order is set between orders of the two adjacent edge vertices, and orders of the sorted edge vertices and the face vertex that have been set are to be used in encoding attribute information of a three-dimensional point. Accordingly, the encoding device can appropriately encode the attribute information of the three-dimensional point by encoding the attribute information using the orders that have been set.

FIG. 38 is a block diagram of encoding device 20. For example, encoding device 20 includes processor 21 and memory 22, and processor 21 performs the above process using memory 22. It should be noted that the encoding device may perform the same process as the above-described decoding device.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

### [Industrial Applicability]

The present disclosure is applicable to an encoding device and a decoding device.

### [Reference Signs List]

- 10: decoding device
- 11, 21: processor
- 12, 22: memory
- 20: encoding device
- 101: target space
- 102, 133: point cloud
- 103, 111, 132: point
- 104: leaf-node
- 112: edge vertex
- 113, 122: range
- 121: approximate plane
- 123: vertex information
- 131: triangle
- 151: centroid vertex
- 161: face vertex

## Claims

1. A decoding method comprising:
deriving sorted edge vertices of a node according to a TriSoup scheme;
deriving a face vertex provided on a surface of the node except for edges of the node;
selecting two adjacent edge vertices that are adjacent to each other in sort order and closest to the face vertex among the sorted edge vertices; and
generating a TriSoup triangle by using the face vertex and one of the two adjacent edge vertices.

2. The decoding method according to claim 1, wherein
an order of the face vertex in the sort order is set between orders of the two adjacent edge vertices.

3. The decoding method according to claim 1, wherein
in the deriving of the sorted edge vertices, edge vertices of the node and face vertices of the node are projected on a plane having a predetermined normal direction, and the edge vertices are sorted based on values of arctangents related to vectors connecting each of the edge vertices projected on the plane and a centroid vertex.

4. The decoding method according to claim 1, wherein
in the deriving of the sorted edge vertices, edge vertices of the node and centroid vertices of the node are projected on a plane having a predetermined normal direction, and
the decoding method further comprises, when a first centroid vertex projected on an edge of the node on the plane is included among the centroid vertices projected on the plane:
sorting first vertices including the edge vertices and the first centroid vertex;
selecting two adjacent edge vertices that are adjacent to each other in sort order among the first vertices sorted, the two adjacent edge vertices being closest to a second face vertex among the centroid vertices, the second face vertex being projected on a part of the node other than the edges on the plane; and
generating a TriSoup triangle by using the second face vertex and one of the two adjacent edge vertices.

5. The decoding method according to claim 1, wherein
in the selecting of the two adjacent edge vertices:
midpoints of pairs of edge vertices that are adjacent to each other in the sort order, among the sorted edge vertices, are calculated; and
a pair of edge vertices corresponding to a midpoint that is closest to the face vertex, among the midpoints calculated, is selected as the two adjacent edge vertices.

6. An encoding method comprising:
deriving sorted edge vertices of a node according to a TriSoup scheme;
deriving a face vertex provided on a surface of the node except for edges of the node;
selecting two adjacent edge vertices that are adjacent to each other in sort order and closest to the face vertex among the sorted edge vertices; and
generating a TriSoup triangle by using the face vertex and one of the two adjacent edge vertices.

7. The encoding method according to claim 6,
an order of the face vertex in the sort order is set between orders of the two adjacent edge vertices, and
orders of the sorted edge vertices and the face vertex that have been set are to be used in encoding attribute information of a three-dimensional point.

8. A decoding device comprising:
a processor; and
memory, wherein
using the memory, the processor:
derives sorted edge vertices of a node according to a TriSoup scheme;
derives a face vertex provided on a surface of the node except for edges of the node;
selects two adjacent edge vertices that are adjacent to each other in sort order and closest to the face vertex among the sorted edge vertices; and
generates a TriSoup triangle by using the face vertex and one of the two adjacent edge vertices.

9. An encoding device comprising:
a processor; and
memory, wherein
using the memory, the processor:
derives sorted edge vertices of a node according to a TriSoup scheme;
derives a face vertex provided on a surface of the node except for edges of the node;
selects two adjacent edge vertices that are adjacent to each other in sort order and closest to the face vertex among the sorted edge vertices; and
generates a TriSoup triangle by using the face vertex and one of the two adjacent edge vertices.
